# EUROPEAN PATENT APPLICATION

(11) **EP 4 553 944 A1**
(43) Date of publication of application: **14.05.2025**
(21) Application number: 23944537.2
(22) Date of filing: 16.11.2023
(51) Int. Cl.: H01M 10/0567, H01M 10/42, H01M 10/0525

(54) **ELECTROLYTE, SECONDARY BATTERY, AND ELECTRICAL APPARATUS**

(30) Priority: 28.09.2023 CN 202311276842
(71) Applicant: Contemporary Amperex Technology Co., Limited, Jiaocheng District Ningde Fujian 352100 (CN)
(72) Inventor: HUANG, Lei, Ningde, Fujian 352100 (CN); HAN, Changlong, Ningde, Fujian 352100 (CN); WANG, Fulin, Ningde, Fujian 352100 (CN); DENG, Yilin, Ningde, Fujian 352100 (CN); WU, Zeli, Ningde, Fujian 352100 (CN); ZHANG, Cuiping, Ningde, Fujian 352100 (CN)
(74) Representative: Gong, Jinping
(86) International application number: PCT/CN2023/132057
(87) International publication number: WO 2025/065831

(57) **Abstract**

This application provides an electrolyte, a secondary battery, and an electric apparatus. The electrolyte includes a first additive having a chemical formula of R((CH₃)ₘSi)ₙ, where R includes at least one of phosphate ester group, phosphite group, borate group, amine group, isocyanate group, fluorine atoms, oxygen atoms, and sulfur atoms, m is 1, 2, or 3, and n is 1, 2, or 3. In the electrolyte, introduction of the first additive can increase the conductivity of the SEI film, which is conducive to improving the lithium-ion transport performance. In addition, the introduction of the first additive allows for good stability of the SEI film, thus allowing for good cycling performance of the battery.

## Description

### CROSS-REFERENCE TO RELATED APPLICATIONS

This application claims priority to Chinese Patent Application No. 2023112768425, filed on September 28, 2023 and entitled "ELECTROLYTE, SECONDARY BATTERY, AND ELECTRIC APPARATUS", which is incorporated herein by reference in its entirety.

### TECHNICAL FIELD

This application relates to the field of secondary battery technologies, and in particular, to an electrolyte, a secondary battery, and an electric apparatus.

### BACKGROUND

The statement herein only provides background information relevant to this application and does not necessarily constitute prior art.

During charge of the battery, a solid electrolyte interface film (SEI film) formed with the participation of an electrolyte affects the cycling performance and lithium-ion transport performance of the battery. However, in the conventional process of improving battery performance, it is hard to effectively achieve both good cycling performance and good lithium-ion transport performance. For example, to improve the cycling performance of the battery, the stability of the SEI film typically needs to be improved to reduce the interfacial side reactions. This adjustment, however, may decrease the transport kinetics of lithium ions, decreasing the charge and discharge speed of the battery.

### SUMMARY

A first aspect of this application provides an electrolyte including a first additive having a chemical formula of R((CH₃)ₘSi)ₙ, where R includes at least one of phosphate ester group, phosphite group, borate group, amine group, isocyanate group, fluorine atoms, oxygen atoms, and sulfur atoms, m is 1, 2, or 3, and n is 1, 2, or 3.

In the electrolyte, introduction of the first additive can increase the conductivity of the SEI film, which is conducive to improving the lithium-ion transport performance. In addition, the introduction of the first additive allows for good stability of the SEI film, which in turn allows for good cycling performance of the battery. That is, as the first additive is introduced into the electrolyte, the battery can achieve both good cycling stability and good lithium-ion transport performance.

In some embodiments, the first additive includes at least one of tri(trimethylsilyl) phosphate, tris(trimethylsilane)phosphite, tris(trimethylsilane)borate, trimethylsilyl isocyanate, trimethylsilyl fluoride, hexamethyldisiloxane, and hexamethyldisilazane.

In some embodiments, a mass percentage of the first additive in the electrolyte is 0.01%-1%. The mass percentage of the first additive in the electrolyte being in this range allows for better participation in the formation of a SEI film with a more stable structure, resulting in a low DCR and good cycling performance of the battery. Optionally, a mass percentage of the first additive in the electrolyte is 0.05%-0.5%.

In some embodiments, the electrolyte further includes a second additive, and the second additive includes ethylene carbonate. Introduction of the second additive can well facilitate the dissociation of electrolytic salt in the electrolyte, increase the conductivity of the electrolyte, and facilitate lithium ion transport. In addition, the second additive can participate in the formation of the SEI film to reduce the interfacial side reactions, which is conducive to improving the cycling performance of the battery.

In some embodiments, a mass percentage of the second additive in the electrolyte is 10%-40%. The mass percentage of the second additive in the electrolyte being in this range allows the electrolyte to maintain sufficient viscosity and high conductivity.

In some embodiments, a mass ratio of the first additive to the second additive is 0.0001-0.05. When the mass ratio of the first additive to the second additive is in this range, decomposed products of the first additive and the second additive exhibit good synergistic effects, which can reduce DCR of the battery while allowing the battery to maintain good high-temperature cycling performance. Optionally, a mass ratio of the first additive to the second additive is 0.0003-0.03.

In some embodiments, the electrolyte further includes a third additive, and the third additive includes at least one of difluorophosphate and tetrafluoroborate. Difluorophosphate and tetrafluoroborate can improve the stability of the SEI film, allowing for better tenacity and more uniform density of the SEI film. In addition, difluorophosphate and tetrafluoroborate can reduce the decomposition of the electrolyte, which is conducive to improving the cycling performance of the battery. Optionally, difluorophosphate includes at least one of lithium difluorophosphate, sodium difluorophosphate, and potassium difluorophosphate. Optionally, tetrafluoroborate includes at least one of lithium tetrafluoroborate, sodium tetrafluoroborate, and potassium tetrafluoroborate.

In some embodiments, a mass percentage of the third additive in the electrolyte is 0.01%-1%. The mass percentage of the third additive in the electrolyte being in this range can further improve the stability of the SEI film, thus further improving the cycling performance of the battery.

In some embodiments, a mass ratio of the first additive to the third additive is 0.1-30. The mass ratio of the first additive to the third additive being in this range allows for both low resistance and good high-temperature cycling performance of the battery. Optionally, a mass ratio of the first additive to the third additive is 3-10.

In some embodiments, the electrolyte further includes a fourth additive, and the fourth additive includes at least one of vinyl carbonate and vinyl ethylene carbonate. The fourth additive can undergo radical polymerization on the surface of the negative electrode to generate lithium alkyl carbonate to participate in formation of the SEI film, which further improves the flexibility of the SEI film, allowing the SEI film to change along with the volume change of the negative electrode. This can reduce the risk of exposure of new active sites caused by SEI film rupture during cycling, reducing the side reactions, thus increasing the cycle life and charge/discharge efficiency of the battery.

In some embodiments, a mass percentage of the fourth additive in the electrolyte is 1%-5%. The mass percentage of the fourth additive in the electrolyte being in this range allows for both low resistance and good high-temperature cycling performance of the battery.

In some embodiments, a mass ratio of a total mass of the first additive and the third additive to a mass of the fourth additive is 0.01-0.5. The mass ratio of the total mass of the first additive and the third additive to the mass of the fourth additive being in this range allows for both good high-temperature cycling performance and kinetics performance of the battery. Optionally, the mass ratio of the total mass of the first additive and the third additive to the mass of the fourth additive is 0.3-0.4.

A second aspect of this application provides a secondary battery including a positive electrode plate, a negative electrode plate, a separator, and the electrolyte. The separator is sandwiched between the positive electrode plate and the negative electrode plate.

In some embodiments, a thickness of the separator is 10 µm-30 µm. With the thickness of the separator in this range, the separator can have good stability, is less likely to be pierced through, and allows lithium ions to pass through at a fast speed, thus allowing the battery to maintain good high-temperature cycling performance and good lithium-ion transport performance.

In some embodiments, a porosity of the separator is 20%-50%. The porosity of the separator being in this range can reduce the risk that metal ions dissolving from the positive electrode plate pass through the separator to reach the negative electrode plate during cycling, which is conducive to reducing the side reactions on the surface of the negative electrode plate, thus allowing the battery to maintain good high-temperature cycling performance. In addition, the porosity of the separator being in this range allows the lithium ions to smoothly pass through the separator, which is conducive for the battery to maintain good lithium-ion transport performance.

A third aspect of this application provides an electric apparatus including the electrolyte and/or the secondary battery.

### BRIEF DESCRIPTION OF DRAWINGS

Reference may be made to one or more of the accompanying drawings for better description and illustration of those embodiments or examples of this application. The additional details or examples used to describe the accompanying drawings should not be considered limitations on the scope of any one of the disclosed application, the currently described embodiments or examples, and the best mode of this application as currently understood. In addition, in all the accompanying drawings, same parts are denoted by same reference signs. In the accompanying drawings:
FIG. 1 is a schematic diagram of a secondary battery according to an embodiment of this application.
FIG. 2 is an exploded view of the secondary battery according to the embodiment of this application in FIG. 1.
FIG. 3 is a schematic diagram of an electric apparatus using a secondary battery as a power source according to an embodiment of this application.

### Reference signs are described as follows:

1. secondary battery; 11. housing; 12. electrode assembly; 13. cover plate; and 2. electric apparatus.

### DETAILED DESCRIPTION OF EMBODIMENTS

For better understanding of this application, this application is described more comprehensively below with reference to relevant accompanying drawings. Preferred embodiments of this application are provided in the accompanying drawings. However, this application can be realized in various different manners and is not limited to the embodiments described in this specification. On the contrary, the purpose of providing these embodiments is to enhance a more comprehensive understanding of the disclosed content of this application.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "or/and" used herein includes any and all combinations of one or more associated items listed.

"Ranges" disclosed in this application are defined in the form of lower and upper limits. A given range is defined by one lower limit and one upper limit selected, where the selected lower and upper limits define boundaries of that particular range. Ranges defined in this method may or may not include end values; any of the end values can be independently included or excluded; and any combinations may be used, which means that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to listing that the parameter is, such as, an integer among 2, 3, 4, 5, 6, 7, 8, 9, 10, 11, 12, and the like. For example, a parameter expressed as an integer selected from "2-10" is equivalent to listing integers of 2, 3, 4, 5, 6, 7, 8, 9, and 10.

**In** this application, a term such as "multiple" or "a plurality of", unless specifically specified, refers to a quantity greater than 2 or equal to 2. For example, "one or more" means one or greater than or equal to two.

Unless otherwise specified, all the embodiments and optional embodiments of this application can be combined with each other to form new technical solutions.

**In** this specification, reference to "embodiment" means that specific features, structures, or characteristics described with reference to the embodiment may be incorporated in at least one embodiment or implementation of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments. The "implementation" mentioned in this specification is understood in a similar manner.

Persons skilled in the art can understand that the order in which the steps are described in the method of each implementation or embodiment does not necessarily imply a strict execution order and does not limit the implementation process in any way. The detailed execution order of the steps should be determined by the function and possible inherent logic of the steps. Unless otherwise specified, all the steps in this application can be performed sequentially or randomly, and are performed sequentially in some embodiments. For example, a method including steps (a) and (b) indicates that the method may include steps (a) and (b) performed sequentially, or may include steps (b) and (a) performed sequentially. For example, that the method may further include step (c) indicates that step (c) may be added to the method in any sequence. For example, the method may include steps (a), (b), and (c), or steps (a), (c), and (b), or steps (c), (a), and (b), or the like.

**In** this application, in the open technical features or solutions described using terms such as "comprising", "including", or "containing" unless otherwise specified, additional members other than those listed are not excluded and can be considered as providing both a closed feature or solution composed of the listed members and an open feature or solution that includes additional members other than those listed. For example, if A includes a1, a2, and a3, unless otherwise specified, it may also include other members or may not include additional members. This can be considered as providing both a feature or solution of "A being composed of a1, a2, and a3" and a feature or solution of "A including not only a1, a2, and a3, but also other members".

In this application, unless otherwise specified, "A (such as B)" indicates that B is one of non-limited examples of A, which can be understood that A is not limited to B.

In this application, the terms "optionally", "optional", or "selectable" mean that something may be present or absent, or any one of two parallel solutions of "being present" or "being absent". If a technical solution involves multiple instances of "optional," unless otherwise specified, there are no contradictions or mutual constraints, and each "optional" is considered independently.

Some embodiments of this application provide an electrolyte including a first additive having a chemical formula of R((CH₃)ₘSi)ₙ, where R includes at least one of phosphate ester group, phosphite group, borate group, amine group, isocyanate group, fluorine atoms, oxygen atoms, and sulfur atoms, m is 1, 2, or 3, and n is 1, 2, or 3. In the electrolyte, introduction of the first additive can increase the conductivity of the SEI film, which is conducive to improving the lithium-ion transport performance. In addition, the introduction of the first additive allows for good stability of the SEI film, thus allowing for good cycling performance of the battery. That is, as the first additive is introduced into the electrolyte, the battery can achieve both good cycling stability and good lithium-ion transport performance.

In some embodiments, m=3. The chemical formula of the first additive is R((CH₃)₃Si)ₙ. During charge of the battery, the first additive is easier to participate in formation of the SEI film, reducing the direct current resistance (DCR) of the battery and further improving the lithium-ion transport performance.

In some embodiments, R includes at least one of phosphite group, borate group, amine group, isocyanate group, oxygen atoms, and sulfur atoms. In addition, during cycling of the battery, the corresponding first additive can effectively alleviate gas production of the battery, thus improving the cycling performance of the battery.

In some embodiments, the first additive includes at least one of tri(trimethylsilyl) phosphate (TMSP, 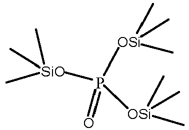 ), tris(trimethylsilane)phosphite (TMSPi, 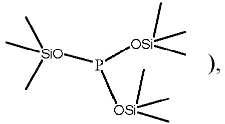 tris(trimethylsilane)borate (TMSB, 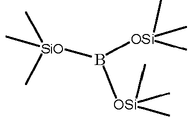 ), trimethylsilyl isocyanate ( 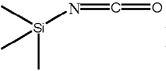 ), trimethylsilyl fluoride (TMSF, 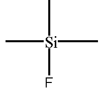 ), hexamethyldisiloxane (HMDSO, 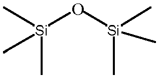 ), and hexamethyldisilazane (HDMS, 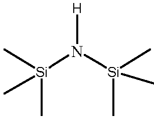 ).

In some embodiments, the first additive includes at least one of tri(trimethylsilyl) phosphate and trimethylsilyl fluoride. In this case, the first additive being selected from tri(trimethylsilyl) phosphate and trimethylsilyl fluoride can more effectively reduce DCR of the battery, improving the initial power performance of the battery.

In some embodiments, the first additive includes at least one of tris(trimethylsilane)phosphite, tris(trimethylsilane)borate, hexamethyldisiloxane, and hexamethyldisilazane. In this case, the first additive being selected from tris(trimethylsilane)phosphite, tris(trimethylsilane)borate, hexamethyldisiloxane, and hexamethyldisilazane can effectively alleviate gas production during cycling of the battery, conducive to improving the stability of an inner structure of the battery.

In some embodiments, a mass percentage of the first additive in the electrolyte is 0.01%-1%. The mass percentage of the first additive in the electrolyte being in this range allows for better participation in the formation of a SEI film with a more stable structure, resulting in a low DCR and good cycling performance of the battery. Optionally, a mass percentage of the first additive in the electrolyte is 0.05%-0.5%. Further, optionally, the mass percentage of the first additive in the electrolyte may be 0.01%, 0.05%, 0.08%, 0.1%, 0.2%, 0.3%, 0.4%, 0.5%, 0.6%, 0.7%, 0.8%, 0.9%, 1%, or the like.

In some embodiments, the electrolyte further includes a second additive, and the second additive includes ethylene carbonate. Introduction of the second additive can well facilitate the dissociation of electrolytic salt in the electrolyte, increase the conductivity of the electrolyte, and facilitate lithium ion transport. In addition, the second additive can participate in the formation of the SEI film to reduce the interfacial side reactions, which is conducive to improving the cycling performance of the battery.

Optionally, a mass percentage of the second additive in the electrolyte is 10%-40%. The mass percentage of the second additive in the electrolyte being in this range allows the electrolyte to maintain sufficient viscosity and high conductivity. Further, optionally, the mass percentage of the second additive in the electrolyte may be 10%, 15%, 20%, 25%, 30%, 35%, 40%, or the like.

In some embodiments, a mass ratio of the first additive to the second additive is 0.0001-0.05. When the mass ratio of the first additive to the second additive is in this range, decomposed products of the first additive and the second additive exhibit good synergistic effects, which can reduce DCR of the battery while allowing the battery to maintain good high-temperature cycling performance. Optionally, a mass ratio of the first additive to the second additive is 0.0003-0.03. Further, optionally, the mass ratio of the first additive to the second additive may be 0.0005, 0.001, 0.005, 0.008, 0.01, 0.02, 0.03, 0.04, or the like.

In some embodiments, the electrolyte further includes a third additive, and the third additive includes at least one of difluorophosphate and tetrafluoroborate. Difluorophosphate and tetrafluoroborate can improve the stability of the SEI film, allowing for better tenacity and more uniform density of the SEI film. In addition, difluorophosphate and tetrafluoroborate can reduce the decomposition of the electrolyte, which is conducive to improving the cycling performance of the battery. Further, optionally, difluorophosphate includes at least one of lithium difluorophosphate, sodium difluorophosphate, and potassium difluorophosphate. Tetrafluoroborate includes at least one of lithium tetrafluoroborate, sodium tetrafluoroborate, and potassium tetrafluoroborate.

In some embodiments, a mass percentage of the third additive in the electrolyte is 0.01%-1%. The mass percentage of the third additive in the electrolyte being in this range can further improve the stability of the SEI film, thus further improving the cycling performance of the battery Further, optionally, the mass percentage of the third additive in the electrolyte may be 0.01%, 0.05%, 0.08%, 0.1%, 0.2%, 0.3%, 0.4%, 0.5%, 0.6%, 0.7%, 0.8%, 0.9%, 1%, or the like.

In some embodiments, a mass ratio of the first additive to the third additive is 0.1-30. The mass ratio of the first additive to the third additive being in this range allows for both low resistance and good high-temperature cycling performance of the battery. Optionally, a mass ratio of the first additive to the third additive is 3-10. Further, optionally, the mass ratio of the first additive to the third additive may be 0.1, 0.5, 0.8, 1, 5, 8, 10, 15, 20, 25, 30, or the like.

In some embodiments, the electrolyte further includes a fourth additive, and the fourth additive includes at least one of vinyl carbonate (VC) and vinyl ethylene carbonate (VEC). The fourth additive can undergo radical polymerization on the surface of the negative electrode to generate lithium alkyl carbonate to participate in formation of the SEI film, which further improves the flexibility of the SEI film, allowing the SEI film to change along with the volume change of the negative electrode. This can reduce the risk of exposure of new active sites caused by SEI film rupture during cycling, reducing the side reactions, thus increasing the cycle life and charge/discharge efficiency of the battery.

Optionally, a mass percentage of the fourth additive in the electrolyte is 1%-5%. The mass percentage of the fourth additive in the electrolyte being in this range allows for both low resistance and good high-temperature cycling performance of the battery. Optionally, a mass percentage of the fourth additive in the electrolyte is 1%-3%. Further, optionally, the mass percentage of the fourth additive in the electrolyte may be 1%, 1.5%, 2%, 2.5%, 3%, 3.5%, 4%, 4.5%, 5%, or the like.

In some embodiments, a mass ratio of a total mass of the first additive and the third additive to a mass of the fourth additive is 0.01-0.5. The mass ratio of the total mass of the first additive and the third additive to the mass of the fourth additive being in this range allows for both high-temperature cycling performance and kinetics performance of the battery. Optionally, the mass ratio of the total mass of the first additive and the third additive to the mass of the fourth additive is 0.3-0.4. Further, optionally, the mass ratio of the total mass of the first additive and the third additive to the mass of the fourth additive may be 0.01, 0.05, 0.08, 0.1, 0.15, 0.2, 0.25, 0.3, 0.35, 0.4, 0.45, 0.5, or the like.

In some embodiments, the electrolyte further includes electrolytic salt and a solvent.

The electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bistrifluoromethanesulfonimide (LiFSI), lithium bistrifluoromethanesulfonimide (LiTFSI), lithium trifluoromethanesulfonate (LiTFS), lithium difluorophosphate (LiPO₂F₂), lithium bis(oxalato)borate (LiDFOB), lithium bis(oxalato)borate (LiBOB), lithium difluorodioxalate phosphate (LiDFOP), and lithium tetrafluoro oxalato phosphate (LiTFOP).

Optionally, the solvent may include one or more of ethylene carbonate (EC, 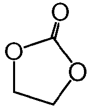 ), propylene carbonate (PC, 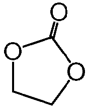 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), 2,3-butylene carbonate ( 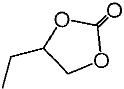 ), fluoroethylene carbonate (FEC), methylmethyl formate, methyl acetate, ethyl acetate, propyl acetate, methyl propionate, ethyl propionate, propyl propionate, methyl butyrate, ethyl butyrate, 1,4-butyrolactone, tetramethylene sulfone, methyl sulfone, ethyl methyl sulfone, and diethyl sulfone.

The electrolyte further optionally includes another additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

Optionally, the another additive in the electrolyte may include but is not limited to one or more of fluoroethylene carbonate (FEC), difluoroethylene carbonate (DFEC), and trifluoromethyl ethylene carbonate (TFPC).

Some other embodiments of this application provide a secondary battery including a positive electrode plate, a negative electrode plate, a separator, and the foregoing electrolyte. The separator is sandwiched between the positive electrode plate and the negative electrode plate. The electrolyte being applied to the battery allows the battery to achieve both good cycling performance and lithium-ion transport performance.

In some embodiments, thickness of the separator is 10 µm (µm)-30 µm. With the thickness of the separator in this range, the separator can have good stability, is less likely to be pierced through, and allows lithium ions to pass through at a fast speed, thus allowing the battery to maintain good high-temperature cycling performance and lithium-ion transport performance. Optionally, the thickness of the separator may be 10 µm, 12 µm, 15 µm, 18 µm, 20 µm, 22 µm, 25 µm, 28 µm, 30 µm, or the like.

In some embodiments, the porosity of the separator is 20%-50%. The porosity of the separator being in this range can reduce the risk that metal ions dissolving from the positive electrode plate pass through the separator to reach the negative electrode plate during cycling, which is conducive to reducing the side reactions on the surface of the negative electrode plate, thus allowing the battery to maintain good high-temperature cycling performance. In addition, the porosity of the separator being in this range allows the lithium ions to smoothly pass through the separator, which is conducive for the battery to maintain good lithium-ion transport performance.

Some other embodiments of this application provide an electric apparatus including the foregoing electrolyte and/or the foregoing secondary battery.

The following describes the secondary battery and the electric apparatus in this application with appropriate reference to the accompanying drawings.

Normally, the secondary battery includes a positive electrode plate, a negative electrode plate, an electrolyte, and a separator. During charge and discharge of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### Positive electrode plate

The positive electrode plate includes a positive electrode current collector and a positive electrode film layer provided on at least one surface of the positive electrode current collector, and the positive electrode film layer includes a positive electrode active material.

**In** a non-limited example, the positive electrode current collector has two opposite surfaces in a thickness direction thereof, and the positive electrode active material layer is disposed on either or both of the two opposite surfaces of the positive electrode current collector.

**In** some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be obtained by forming a metal material on the polymer material matrix. In the positive electrode current collector, a non-limited example of the metal material may include one or more of aluminum, aluminum alloy, nickel, nickel alloy, titanium, titanium alloy, silver, and silver alloy. In the positive electrode current collector, a non-limited example of the polymer material matrix may include one or more of polypropylene (PP), polyethylene terephthalate (PET), polybutylene terephthalate (PBT), polystyrene (PS), and polyethylene (PE).

**In** some embodiments, the positive electrode active material may be a well-known positive electrode active material used for batteries in the prior art. In a non-limited example, the positive electrode active material may include one or more of the following materials: olivine-structured lithium-containing phosphate, lithium transition metal oxide, and respective modified compounds thereof. However, this application is not limited to such materials, and may alternatively use other conventional materials that can be used as positive electrode active materials for batteries. One type of these positive electrode active materials may be used alone, or two or more of them may be used in combination. An example of the lithium transition metal oxide may include but is not limited to one or more of lithium cobalt oxide (for example, LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. A non-limited example of olivine-type lithium-containing phosphate may include but is not limited to one or more of lithium iron phosphate, composite material of lithium iron phosphate and carbon, lithium manganese phosphate, composite material of lithium manganese phosphate and carbon, lithium manganese iron phosphate, and composite material of lithium manganese iron phosphate and carbon. A non-limited example of lithium cobalt oxide may include LiCoO₂; a non-limited example of lithium nickel oxide may include LiNiO₂; a non-limited example of lithium manganese oxide may include LiMnO₂ and LiMn₂O₄; and a non-limited example of lithium nickel cobalt manganese oxide may include LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short). A non-limited example of lithium nickel cobalt aluminum oxide may include LiNi_{0.8}Co_{0.15}Al_{0.05}O₂.

**In** some embodiments, the positive electrode active material layer further optionally includes a binder. In a non-limited example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

**In** some embodiments, the positive electrode active material layer further optionally includes a conductive agent. In a non-limited example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared in the following manner: the constituents used for preparing the positive electrode plate, for example, the positive electrode active material, the conductive agent, the binder, and any other constituents, are dispersed in a solvent to form a positive electrode slurry; and the positive electrode slurry is applied onto at least one side surface of the positive electrode current collector, followed by processes such as drying and cold pressing to produce a positive electrode plate. The type of the solvent may be selected from but is not limited to any one of the foregoing embodiments, for example, N-methylpyrrolidone (NMP). The positive electrode slurry may be applied to one single surface of the positive electrode current collector or two surfaces of the positive electrode current collector. The positive electrode slurry may be applied to one single surface of the positive electrode current collector or two surfaces of the positive electrode current collector. Solid content of the positive electrode slurry may be 40 wt%-80 wt%. The viscosity of the positive electrode slurry at the room temperature may be adjusted to 5000 mPa·s (mPa·s)-25000 mPa·s. When the positive electrode slurry is applied, the unit areal density of the application, based on a dry weight (excluding the solvent), may be 15 mg/cm² (mg/cm²)-35 mg/cm². Compact density of the positive electrode plate may be 3.0 g/cm³ (g/cm³)-3.6 g/cm³, optionally 3.3 g/cm³-3.5 g/cm³.

### Negative electrode plate

The negative electrode plate includes a negative electrode current collector and a negative electrode active material layer disposed on at least one surface of the negative electrode current collector, and the negative electrode active material layer includes a negative electrode active material.

In a non-limited example, the negative electrode current collector includes two opposite surfaces in its thickness direction, and the negative electrode active material layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be obtained by forming a metal material on the polymer material matrix. In the negative electrode current collector, a non-limited example of the metal material may include one or more of copper, copper alloy, nickel, nickel alloy, titanium, titanium alloy, silver, and silver alloy. In the negative electrode current collector, a non-limited example of the polymer material matrix may include one or more of polypropylene (PP), polyethylene terephthalate (PET), polybutylene terephthalate (PBT), polystyrene (PS), and polyethylene (PE).

In some embodiments, the negative electrode active material may be a well-known negative electrode active material used for batteries in the art. In a non-limited example, the negative electrode active material may include one or more of the following materials: artificial graphite, natural graphite, soft carbon, hard carbon, a silicon-based material, a tin-based material, and lithium titanate. The silicon-based material may include one or more of elemental silicon, silicon-oxygen compound, silicon-carbon composite, silicon-nitrogen composite, and silicon alloy. The tin-based material may include one or more of elemental tin, tin-oxygen compounds, and tin alloys. However, this application is not limited to these materials, and may use other conventional materials that can be used as negative electrode active materials for batteries instead. One of these negative electrode active materials may be used alone, or two or more of them may be used in combination.

In some embodiments, the negative electrode active material layer further optionally includes a binder. The binder may include one or more of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include one or more of superconducting carbon, acetylene black, carbon black, Ketjen black, carbon dots, carbon nanotubes, graphene, and carbon nanofiber.

In some embodiments, the negative electrode active material layer further optionally includes other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (a non-limited example of the solvent may be deionized water) to form a negative electrode slurry; and the negative electrode slurry is applied onto at least one side surface of the negative electrode current collector, followed by processes such as drying and cold pressing to produce a negative electrode plate. The negative electrode slurry may be applied to one single surface of the negative electrode current collector or two surfaces of the negative electrode current collector. Solid content of the negative electrode slurry may be 40 wt%-60 wt%. The viscosity of the negative electrode slurry at the room temperature may be adjusted to 2000 mPa·s-10000 mPa·s. When the negative electrode slurry is applied, the unit areal density of the application, based on a dry weight (excluding the solvent), may be 75 g/m² (g/m²)-220 g/m². Compact density of the negative electrode plate may be 1.0 g/cm³-1.8 g/cm³.

### Electrolyte

The electrolyte conducts ions between the positive electrode plate and the negative electrode plate. The electrolyte is not particularly limited to any particular type in this application, and may be selected depending on needs. For example, the electrolyte may be in a liquid state, a gel state, or an all-solid state.

In some embodiments, the electrolyte is a liquid electrolyte. Optionally, the electrolyte may be selected from the electrolytes in this application.

### Separator

In some embodiments, the secondary battery may further include a separator. The separator is not limited to any particular type in this application, and may be any well-known porous separator with good chemical stability and mechanical stability.

In some embodiments, a material of the separator may include one or more of glass fiber, nonwoven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, thickness of the separator is 6 µm-40 µm, and optionally 12 µm-20 µm.

In some embodiments, a positive electrode plate, a negative electrode plate, and a separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. The soft package may be made of plastic, and further, a non-limited example of the plastic may include one or more of polypropylene, polybutylene terephthalate, and polybutylene succinate.

The secondary battery includes at least one battery cell. The secondary battery may include one or more battery cells.

In this application, unless otherwise specified, the "battery cell" refers to the fundamental unit capable of converting chemical energy and electrical energy mutually. Furthermore, the battery cell typically includes at least a positive electrode plate, a negative electrode plate, and an electrolyte. During charge and discharge of the battery, active ions are intercalated and deintercalated between the positive electrode plate and the negative electrode plate. The electrolyte conducts active ions between the positive electrode plate and the negative electrode plate.

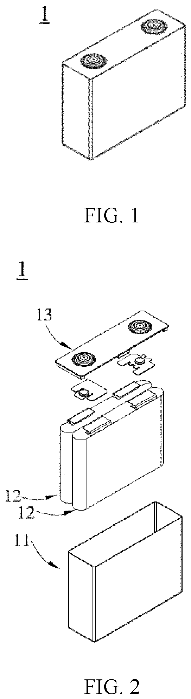

This application does not impose special limitations on the shape of the battery cell, and the battery cell may be cylindrical, rectangular, or of any other shapes. For example, FIG. 1 shows a secondary battery 1 of a rectangular structure as an example.

In some embodiments, referring to FIG. 2, the outer package may include a housing 11 and a cover plate 13. The housing 11 may include a base plate and a side plate connected onto the base plate, where the base plate and the side plate enclose an accommodating cavity. The housing 11 has an opening communicating with the accommodating cavity, and the cover plate 13 can cover the opening to seal the accommodating cavity. The positive electrode plate, the negative electrode plate, and the separator may be made into an electrode assembly 12 through winding or lamination. The electrode assembly 12 is enclosed in the accommodating cavity. Electrolyte infiltrates into the electrode assembly 12. The secondary battery 1 may include one or more electrode assemblies 12, and persons skilled in the art may make choices based on actual requirements.

The secondary battery may be a battery module or a battery pack.

The battery module includes at least one battery cell. The battery module may include one or more battery cells. The specific quantity may be chosen by persons skilled in the art based on use and capacity of the battery module.

In the battery module, a plurality of battery cells may be sequentially arranged in a length direction of the battery module. Certainly, the batteries may alternatively be arranged in any other manner. Further, the plurality of battery cells may be fastened by using fasteners.

Optionally, the battery module may further include a housing with an accommodating space, and the plurality of battery cells are accommodated in the accommodating space.

In some embodiments, the battery module may be further assembled into a battery pack, and the battery pack may include one or more battery modules. The specific quantity may be chosen by persons skilled in the art based on use and capacity of the battery pack.

The battery pack may include a battery box and a plurality of battery modules arranged in the battery box. The battery box includes an upper box body and a lower box body. The upper box body can be engaged with the lower box body to form an enclosed space for accommodating the battery modules. The plurality of battery modules may be arranged in the battery box in any manner.

In addition, this application further provides an electric apparatus, where the electric apparatus includes the secondary battery of this application. The secondary battery may be used as a power source of the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The secondary battery may be selected for the electric apparatus based on requirements thereof.

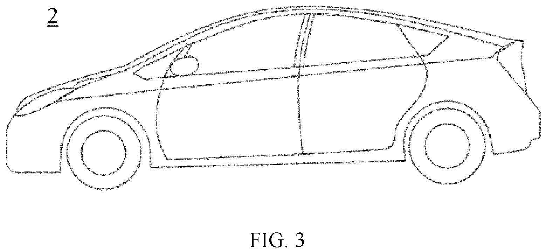

FIG. 3 shows an electric apparatus 2 as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

To describe the technical problems solved by this application, technical solutions, and beneficial effects of this application more clearly, the following further describes this application in detail with reference to the embodiments and accompanying drawings. Apparently, the described embodiments are merely some but not all of the embodiments of this application. The following description of at least one exemplary embodiment is merely illustrative and definitely is not construed as any limitation on this application or on use of this application. All other embodiments obtained by a person of ordinary skill in the art based on the embodiments of this application without creative efforts shall fall within the protection scope of this application.

Examples whose technical solutions or conditions are not specified are made in accordance with technical solutions or conditions described in literature in the art or made in accordance with product instructions. The reagents or instruments used are all conventional products that are commercially available if no manufacturer is indicated.

### Example 1

### (1) Preparation of positive electrode plate

A positive electrode material lithium iron phosphate, polyvinylidene fluoride (PVDF), and carbon black (SP) were mixed in a mass ratio of 97:2:1 with an NMP solvent, and stirred to produce a positive electrode slurry dispersed uniformly, the positive electrode slurry was evenly applied onto two surfaces of an aluminum foil, followed by drying, cold pressing, and cutting to produce a positive electrode plate.

### (2) Preparation of negative electrode plate

Artificial graphite, carbon black, styrene butadiene rubber, and carboxymethyl cellulose sodium were mixed in a mass ratio of 97:0.5:1.5:1 with water, and stirred to produce a negative electrode slurry dispersed uniformly, the negative electrode slurry was evenly applied onto two surfaces of a cooper foil, followed by drying, cold pressing, and cutting to produce a negative electrode plate.

(3) A polyethylene film was used as a separator Thickness and porosity of the separator are shown in Table 1.

(4) Compositions of electrolytes are shown in Table 1.

### (5) Preparation of secondary battery

The positive electrode plate, the negative electrode plate, and the separator were wound into an electrode assembly and then placed in a housing formed by an aluminum shell, an aluminum-plastic film, and the like. The electrolyte was injected and left standing at a high temperature, followed by formation and capacity grading to obtain the secondary battery.

Examples 2 to 20, Comparative examples 1 to 4, and Example 1 were different in compositions of the electrolytes, which is specifically as shown in Table 1.

### Test cases

### (1) Test of high-temperature cycling performance at 60°C (°C)

At 60°C, batteries in each example and comparative example were charged to a voltage upper limit of 3.8 V at a constant current of 0.5C and then charged to current of 0.05C at a constant voltage. The batteries were left standing for 5 minutes and discharged to 2.0 V at a constant current of 1/3C. This was an initial battery charge and discharge cycle and the discharge capacity at this moment was recorded as discharge capacity D1 of the initial battery cycle. The batteries were cycled for charge and discharge tests according to the foregoing method, the capacity Dn of the battery was recorded after an n-th cycle, and the capacity retention rate was Dn/D1. The quantity of cycles completed when the capacity retention rate was 80% was recorded. The results are shown in Table 1 below.

### 2. DCR test

At 25°C, batteries in each example and comparative example were charged to a voltage upper limit of 3.8 V at a constant current of 0.5C and then charged to current of 0.05C at a constant voltage. Next, the batteries were discharged at a constant current of 0.5C for 1 hour to adjust the battery to 50% SOC, and the voltage at the moment was recorded as U1. Then, the batteries were discharged at a constant current of 4C for 30s, and the voltage at this moment was recorded as U2. DCR=(U1-U2)/4C. The results are shown in Table 1 below. DCR can indicate the transport performance of the lithium ions.

### (3) Gas production test

The gas production rate of the battery can be represented by the swelling rate of the battery. Batteries in each example and comparative example were charged to 3.8 V at a constant current of 0.1C and then charged to a current equal to or less than 0.05C at a constant voltage of 3.8 V. At this moment, the batteries were fully charged and their volumes V1 were measured using a drainage method. Next, the fully charged batteries were stored at 60°C, taken out after 30 days, and left standing for 2 hours at 25°C, and their volumes V2 were measured using the drainage method. The gas production rate of the battery=(V2-V1)/V1×100%. The results are shown in Table 1 below.

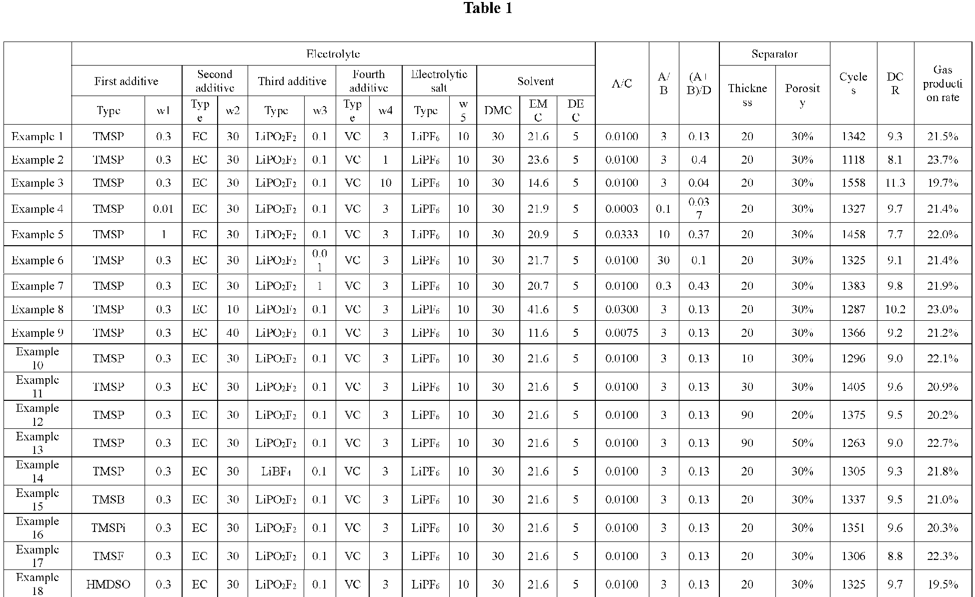

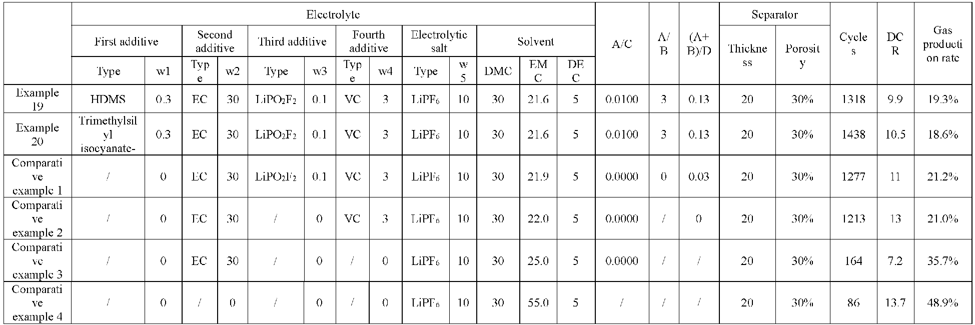

In Table 1, w1 represents amass percentage of the first additive in the electrolyte; w2 represents a mass percentage of the second additive in the electrolyte; w3 represents a mass percentage of the third additive in the electrolyte; w4 represents a mass percentage of the fourth additive in the electrolyte; w5 represents a mass percentage of the electrolytic salt in the electrolyte; A/C represents a mass ratio of the first additive to the second additive; A/C represents a mass ratio of the first additive to the third additive; and (A+B)/D represents a mass ratio of total mass of the first additive and the third additive to the fourth additive. The thickness of the separator is in the unit of µm. The DCR is in the unit of mΩ.

It can be seen from Table 1 that when the electrolyte includes the first additive, the battery can achieve both good cycling performance and lithium-ion transport performance.

Further, when TMSB, TMSPi, HMDSO, HDMS, and trimethylsilyl isocyanate are used as the first additive in comparison with TMSP and TMSF, the battery, despite having relatively higher DCR, has a lower gas production rate. This is conducive to improving the stability of an internal structure of the battery.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. An electrolyte, comprising a first additive having a chemical formula of R((CH₃)ₘSi)ₙ, wherein R comprises at least one of phosphate ester group, phosphite group, borate group, amine group, isocyanate group, fluorine atoms, oxygen atoms, and sulfur atoms, m is 1, 2, or 3, and n is 1, 2, or 3.

2. The electrolyte according to 1, wherein the first additive comprises at least one of tri(trimethylsilyl) phosphate, tris(trimethylsilane)phosphite, tris(trimethylsilane)borate, trimethylsilyl isocyanate, trimethylsilyl fluoride, hexamethyldisiloxane, and hexamethyldisilazane.

3. The electrolyte according to claim 1 or 2, wherein a mass percentage of the first additive in the electrolyte is 0.01%-1%, optionally 0.05%-0.5%.

4. The electrolyte according to any one of claims 1 to 3, wherein the electrolyte further comprises a second additive, and the second additive comprises ethylene carbonate.

5. The electrolyte according to claim 4, wherein a mass percentage of the second additive in the electrolyte is 10%-40%.

6. The electrolyte according to claim 4 or 5, wherein a mass ratio of the first additive to the second additive is 0.0001-0.05, optionally 0.0003-0.03.

7. The electrolyte according to any one of claims 1 to 6, wherein the electrolyte further comprises a third additive, and the third additive comprises at least one of difluorophosphate and tetrafluoroborate; wherein
optionally, difluorophosphate comprises at least one of lithium difluorophosphate, sodium difluorophosphate, and potassium difluorophosphate;
optionally, tetrafluoroborate comprises at least one of lithium tetrafluoroborate, sodium tetrafluoroborate, and potassium tetrafluoroborate; and
optionally, a mass percentage of the third additive in the electrolyte is 0.01%-1%.

8. The electrolyte according to claim 7, wherein a mass ratio of the first additive to the third additive is 0.1-30, optionally 3-10.

9. The electrolyte according to claim 7 or 8, wherein the electrolyte further comprises a fourth additive, and the fourth additive comprises at least one of vinyl carbonate and vinyl ethylene carbonate.

10. The electrolyte according to claim 9, wherein a mass percentage of the fourth additive in the electrolyte is 1%-5%.

11. The electrolyte according to claim 9 or 10, wherein a mass ratio of a total mass of the first additive and the third additive to a mass of the fourth additive is 0.01-0.5, optionally 0.3-0.4.

12. A secondary battery, comprising a positive electrode plate, a negative electrode plate, a separator, and the electrolyte according to any one of claims 1 to 11, wherein the separator is sandwiched between the positive electrode plate and the negative electrode plate.

13. The secondary battery according to claim 12, wherein a thickness of the separator is 10 µm-30 µm; and/or a porosity of the separator is 20%-50%.

14. An electric apparatus, comprising the electrolyte according to any one of claims 1 to **11** and/or the secondary battery according to any one of claims 12 and 13.
